# EUROPÄISCHE PATENTANMELDUNG

(11) **EP 0 530 898 A1**
(43) Veröffentlichungstag der Anmeldung: **10.03.1993**
(21) Anmeldenummer: 92202592.9
(22) Anmeldetag: 19.08.1992
(51) Int. Cl.: C10L 9/10, B01D 53/34

(54) **Vefahren zum Betreiben eines Kohlekraftwerks**

(30) Priorität: 03.09.1991 DE 4129240
(71) Anmelder: STEAG Aktiengesellschaft, D-45128 Essen (DE)
(72) Erfinder: Farwick, Hermann, W-4220 Dinslaken (DE); Riepert, Albert, W-4230 Wesel (DE)

(57) **Zusammenfassung**

Bei einem Steinkohlekraftwerk mit einer Trockenfeuerungsanlage (6), deren Rauchgasstrom durch eine Denox- (20), Luvo- (21), Staubabscheide- (22) und Entschwefelungsanlage (24) geleitet (5) wird, wird dem Kohlenstaub vor Erreichen des Brenners kontinuierlich eine CaO-haltige Substanz beigemischt und der CaO-Gehalt des Brennstoffs auf einen Wert im Bereich von 0,4-0,6% eingestellt. Als CaO-haltige Substanz wird ein bei der Kühlturm-Zusatzwasser-Aufbereitung (KZA) gewonnenes Produkt verwendet, der vor der Kohlemühle (4) der Kohle-Förderanlage (2) aufgegeben wird. Die Verwendung eines hohen Ca-Anteils im Brennstoff ermöglicht eine weitgehende Abbindung von Arsen im Denox-Katalysator und reduziert die Konversionsrate SO₂/SO₃ im Katalysator auf ca. 60%.

## Beschreibung

Die Erfindung bezieht sich auf ein Verfahren zum Betreiben eines Kohlekraftwerks unter Verwendung einer Trockenfeuerungsanlage, deren Rauchgasstrom durch Denox-, Luvo-, Staubabscheide- und Entschwefelungsanlagen geleitet wird.

Abgasströme von Verbrennungsanlagen müssen unter den Anforderungen des Umweltschutzes und der Lebensdauer der Anlagen von unerwünschten Bestandteilen gereinigt werden, die für die Umwelt und/oder die den Gasstrom führenden Anlagenteile schädlich sind.

Abgasströme enthalten neben festen Partikeln, die relativ leicht herausgefiltert werden können, schädliche Beimengungen, die bei Gasströmen hinreichend hoher Temperatur gasförmig sind. Dies sind in Verbrennungsanlagen, die fossile Brennstoffe nutzen, beispielsweise säurebildende Gase wie SO₂, NOₓ, SO₃ und Halogenwasserstoffe.

Für die Trennung der einzelnen Gase vom Gasstrom sind eine Vielzahl von Verfahren bekannt, die nach verschiedenen physikalisch-chemischen Prinzipien bei unterschiedlichen Gastemperaturen arbeiten. Dabei findet im allgemeinen eine Abkühlung des Gasstromes zwischen Verbrennungskessel und Abgas-Schornstein statt. Aus energetischen Gründen (Wirkungsgrad der Anlage) und unter dem Gesichtspunkt des Umweltschutzes wird dabei angestrebt, daß die Temperatur des Gasstromes am Ende dieses Weges, also am Schornstein, niedrig ist.

Dies führt dazu, daß an einem Ort des Gasstromes die Taupunkt-Temperaturen zumindest eines Teils der säurebildenden Gas-Beimengungen unterschritten werden und daß es dann zur Kondensation von Säuren an den inneren Anlagenteilen kommt. Diese Kondensation von Säuren im Gasstrom von Verbrennungsanlagen, insbesondere von Schwefelsäure und Halogenwasserstoffen, führt zu starken Belastungen der Anlagenteile, die dann mit hohem Aufwand (Emaillierung, Beschichtung, etc.) geschützt werden müssen.

Beispielsweise erfolgt bei konventionellen Anlagen die Abkühlung des Gasstromes unter den Taupunkt von Schwefelsäure und Halogenwasserstoffen in einem Wärmetauscher, der zur Vorwärmung der dem Kessel zugeführten Verbrennungsluft genutzt wird (Luvo). Bei kostengünstigen regenerativen Wärmetauschern müssen deshalb die inneren Anlagenteile mit Emaille überzogen, häufig gereinigt und oft ausgetauscht werden, wobei zusätzlich zu den Wartungskosten des Wärmetauschers Kosten durch einen notwendigen Stillstand der Verbrennungsanlage entstehen.

Die Anmelderin hat in der Patentanmeldung P 41 13 793.0-43 ein Verfahren zum Entfernen unerwünschter gasförmiger Bestandteile beschrieben, bei dem an einem Ort des Abgasstromes, an dem sich das Abgas auf eine Temperatur oberhalb der Taupunkttemperatur des unerwünschten gasförmigen Bestandteils befindet, Erdalkalioxide oder - hydroxide eingebracht werden; der Abgasstrom wird anschließend auf eine Temperatur unterhalb der Taupunkttemperatur des unerwünschten Bestandteils gebracht, wobei sich zumindest ein Teil des unerwünschten Bestandteils in Verbindung mit den eingebrachten Erdalkalioxiden und/oder -hydroxiden in einen Feststoff umwandelt.

In Versuchsreihen nach Inbetriebnahme moderner Denoxanlagen in Kohlekraftwerken wurde festgestellt, daß die Einschränkung der Lebensdauer der Kraftwerkskomponenten stromab der Verbrennungsanlage, insbesondere des Luvo's, der Rauchgaskanäle, des Elektrofilters, der Saugzüge, in der REA und der Gavo-Anlage vor allem zwei Ursachen hat:
a) Hohe Rauchgastemperaturen bei Vollastbetrieb von 390°C, verbunden mit einer hohen Konversionsrate von SO₂/SO₃ (bei 390°C ca. 3%; bei 355°C höchstens 1,1%).
b) Die niedrige Rauchgastemperatur von < 320°C im Teillastbetrieb, verbunden mit einer Versalzungsgefahr des zur Denox-Anlage gehörigen Katalysators.

Bisher ging mit der hohen Konversionsrate von bis zu 3% eine Erhöhung des Säuretaupunkts von 90°C auf etwa 125°C einher. Im Luvo traten Verschmutzungen auf, die nicht mehr mit den Bläsern abgereinigt werden konnten. Die Folge waren Ablagerungen in nachgeschalteten Abgaskomponenten, wie im E-Filter, in den Rauchgaskanälen, im Saugzug und in der REA durch den höheren Taupunkt sowie eine erhöhte Korrosionsbelastung.

Der Erfindung liegt die Aufgabe zugrunde, das eingangs genannte Verfahren so zu verbessern, daß die Lebensdauer der hinter der Verbrennungsanlage im Rauchgasstrom angeordneten Kraftwerkskomponenten ohne schädliche Nebeneffekte erhöht werden kann und Ablagerungen und Korrosionsbelastungen vermindert werden.

Gelöst wird diese Aufgabe erfindungsgemäß dadurch, daß als Brennstoff ein CaO-haltiger Kohlenstaub verwendet und der CaO-Gehalt des Brennstoffs auf einen Bereich zwischen 0,3% und demjenigen Maximalanteil eingestellt wird, bei dem der Erweichungspunkt der Verbrennungspartikel merklich herabgesetzt wird.

Durch die Einstellung eines hohen CaO- bzw. Ca-Anteils im Brennstoff der Trockenfeuerungsanlage wird eine wesentliche SO₃-Reduzierung vor Luvo erreicht. Diese SO₃-Reduzierung ist nach Untersuchung der Anmelderin auf zwei Mechanismen zurückzuführen:
1. Reaktion von SO₃ und CaO zu CaSO₄;
2. Konversionsdämpfung im Katalysator durch erhöhte Alkalisierung (erhöhter Kalkgehalt).

Es wurde beispielsweise in der Praxis festgestellt, daß durch Anhebung des CaO-Gehaltes von 0,2% auf 0,3% eine Absenkung des SO₃-Gehaltes im Rauchgas vor Luvo von 60% erreichbar ist. Durch entsprechende Einstellung des bereits vor dem Brenner im Brennstoff zudosierten CaO-Anteils ist daher die SO₃-Abbindung steuerbar. Dementsprechend wirken sich Schwankungen im Säuretaupunkt auch nicht oder nicht mehr vergleichsweise stark auf Ablagerungen und Korrosionen in den der Denox-Anlage nachgeschalteten Kraftwerkskomponenten aus. Überraschenderweise läßt sich ein weiterer gravierender Vorteil durch die Verwendung von stark CaO-haltigem Kohlenstaub erreichen: Der relativ hohe CaO-Anteil bindet die Arsenspurenanteile (Abbindung von Arsen durch Kalk zu Calciumarsenat), wodurch die Katalysatorstandzeit verlängert wird.

Gemäß bevorzugter Weiterbildung der Erfindung ist vorgesehen, daß dem Kohlenstaub vor Erreichen des Brenners kontinuierlich CaO beigemischt und der CaO-Gehalt auf einen Wert im Bereich von 0,4 bis 0,6 % eingestellt wird. Die Einstellung des CaO-Gehalts innerhalb dieses Bereichs ist relativ unkritisch. Es kann daher Kohle mit stark unterschiedlichen Kalkgehalten eingesetzt und der erwünschte Kalkgehalt durch vorzugsweise kontinuierliche Bekalkung des Brennstoffs vor Brenner eingestellt werden.

In bestimmten Fällen kann es zweckmäßig sein, den Kalkgehalt höher als den an sich kritischen Grenzwert von 0,6 % einzustellen. Zur Vermeidung der Unterschreitung eines vorgegebenen Erweichungspunktes der Verbrennungspartikel kann dann gemäß Weiterbildung der Erfindung der Trockenfeuerungsanlage ein den Erweichungspunkt der Verbrennungspartikel entsprechend erhöhendes Mittel, z.B. Bauxit (Al₂O₃), zugeführt werden.

Bei der in modernen Kohlekraftwerken üblichen Brennstoffbeschickung, wobei die Kohle zu einem Bunker transportiert, vom Bunker einer Mühle aufgegeben, gemahlen und dosiert den Brennern der Trockenfeuerungsanlage zugeführt wird, erfolgt die Zudosierung einer Ca-haltigen Substanz zur Kohle vorzugsweise während deren Transport zum Bunker. In bevorzugter Weiterbildung der Erfindung ist dabei vorgesehen, daß als Ca-haltige Substanz ein bei der Kühlturm-Zusatzwasser-Aufbereitung (KZA) gewonnenes Produkt verwendet wird. Die KZA-Substanz wird sedimentiert, eingedickt und entwässert, bevor sie dem Brennstoff zudosiert wird.

Die Kohle kann während des Transports zum Bunker über eine Bandwaage geleitet und der Meßwert der Bandwaage als Führungsgröße zur Dosierung der Ca-haltigen Substanz verwendet werden.

Die Einstellung eines CaO-Gehalts zwischen 0,4 und 0,6 % in dem als Brennstoff dienenen Kohlenstaub ermöglicht auch die Benutzung des Luvo als Säurefalle.

Bekannte Maßnahmen zur Erhöhung der Lebensdauer der beteiligten Anlageteile, so der Ersatz der Luvo-Beblechung durch eine emaillierte Beschichtung auf der kalten Seite, finden durch das erfindungsgemäße Verfahren eine günstige Unterstützung. Der erfindungsgemäß gewährleistete hohe Calciumoxidanteil unterstützt die Säurebindung in Luvo und dessen Benutzung als Säurefalle. Der sich bildende Flugstaub ist überwiegend alkalisch. Der SO₃-Gehalt nach REA wird durch die Erfindung deutlich reduziert. Dies gilt auch für die Korrosionsschäden an den Rauchgaskanälen zum Kamin.

Im folgenden wird die Erfindung anhand eines in der Zeichnung dargestellten Ausführungsbeispiels näher erläutert. In der Zeichnung zeigt:

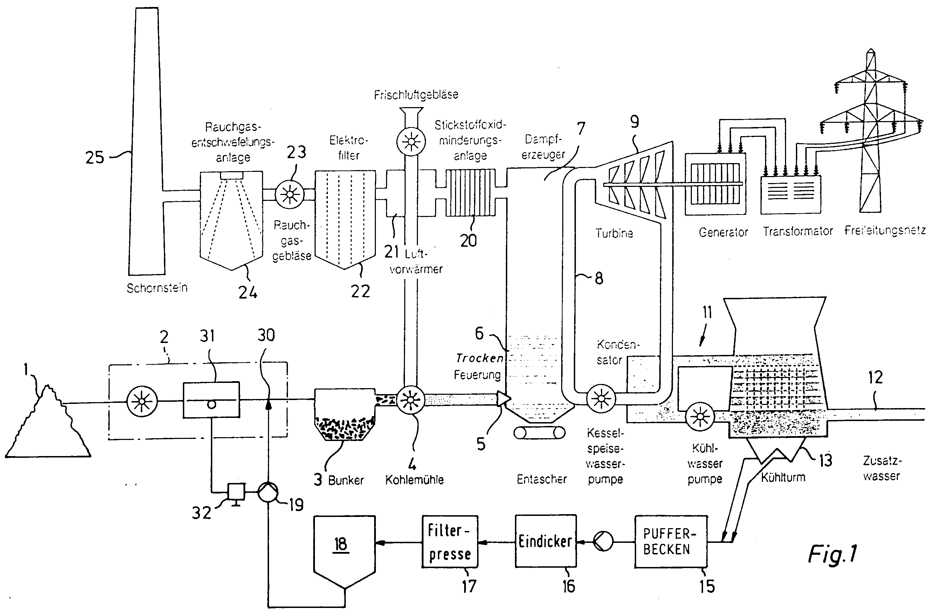

- Fig. 1: die wesentichen Komponenten - teilweise als Blockschaltbild - eines Steinkohlekraftwerks, in welchem das erfindungsgemäße Verfahren realisiert werden kann.

Das beschriebene Verfahren geht von dem folgenden Kraftwerkprozesses: Die Kohle wird von einem Kohlenlager 1, über eine im strichpunktierten Block 2 schematisch dargestellte Förderanlage 2 zu einem Kohlebunker 3 und von dort zur zugehörigen Kohlemühle 4 transportiert. In der Kohlemühle 4 wird die Kohle gemahlen, mit Heißluft getrocknet und als Brennstoff der Brenneranordnung 5 einer Trockenfeuerungsanlage 6 zugeführt. Die bei der Verbrennung der Kohle in der Trockenfeuerungsanlage freigesetzte Wärme wird an das Rohrsystem im Dampferzeuger 7 übertragen. Das durch die Rohre 8 strömende Wasser wird dabei unter Druck verdampft und anschließend als Heizdampf zur Turbine 9 geleitet. Die an der Turbine verfügbare Energie wird schließlich in elektrische Energie umgesetzt. An der Niederdruckseite der Turbine sorgt ein als Ganzes mit 11 bezeichnetes Kühlsystem für die Kondensation des Dampfs. Das Kondensat wird über eine Kesselspeisewasserpumpe in den Dampferzeuger 7 zurückgeführt.

Die Abgase aus dem Verbrennungsprozeß im Dampferzeuger 7 werden in einer Stickstoffminderungsanlage (Denox-Anlage) 20 von Stickstoffoxiden befreit und in einem Luvo 21 unter Vorwärmung der Verbrennungsluft gekühlt. Danach erfolgt in einem Elektrofilter 22 eine Staubabscheidung, und das von Staub befreite Abgas wird mittels eines Rauchgasgebläses 23 in eine Rauchgasentschwefelungsanlage (REA) 24 geleitet. Das aus der REA 24 austretende Reingas wird dann durch den Schornstein 25 ausgeblasen.

Die Kühlung erfolgt in einem geschlossenen Kühlkreislauf 11. Im Hauptkühlkreislauf sind bekanntlich Wasserverluste unvermeidlich. Einerseits findet eine nicht unerhebliche Verdunstung über den Kühlturm statt (abhängig von der Blockleistung). Andererseits treten Verluste durch Spülwasser, Abspritzwasser für die Kondensatkühlung und nicht zuletzt durch Abschlämmung aus der Kühlturmtasse auf. Diese Verluste müssen ausgeglichen werden, wobei an die Qualität des in den geschlossenen Kühlkreislauf eingeführten Zusatzwassers hohe Anforderungen zu stellen sind, um eine Kesselsteinbildung und eine Verschmutzung im Kondensatorbereich und in den Kühlturmeinbauten zu vermeiden oder zumindest zu minimieren.

Das über die Leitung 12 zugeführte Rohwasser wird in einer Misch- und Verteilkammer mit Eisenchloridlösung versetzt, um die suspendierten Feststoffe auszuflocken. In einem Flocker wird dem Wasser Kalkmilch und Kontaktschlamm zugeführt und innig verrührt. Das aus Kalkmilch und Hydrogencarbonat gebildete Calciumcarbonat fällt als Feststoff aus und bildet mit dem Eisenhydroxid eine große Flocke, die sich in der Beruhigungszone 13 des Flockers absetzt. Das geklärte Wasser fließt über eine Reinwasserkammer zur Kühlturmtasse.

Der hier interessierende ausgeflockte und abgesetzte Produkt aus Calciumcarbonat, Sedimenten (Feststoffen) des Rohwassers und Eisenhydroxid wird mit Räumschildern in Taschen befördert und über ein Pufferbecken 15 zu einer Eindickanlage 16 geleitet. In dieser findet eine Vorentwässerung des Schlamms statt. Mittels in der Zeichnung nicht dargestellten Hochdruckpumpen wird die eingedickte Masse durch Kammerfilterpressen 17 gedrückt und entwässert. Der Filterkuchen fällt in einen Bunker 18 und steht dort zur weiteren Verwendung bzw. Entsorgung zur Verfügung.

Insoweit ist der beschriebene Kraftwerksprozeß herkömmlicher Art. Wie eingangs gesagt, war bei bekannten Realisierungen dieser Art von Kraftwerksprozessen mit hohen Konversionsraten in der Denox-Anlage 20, verbunden mit einer Erhöhung des Säuretaupunkts bei Vollastbetrieb am Ausgang des Luvo 21 auf ca. 125°C, zu rechnen. Die Folge war, daß der unkritische Luvo nicht in dem gewünschten Umfang als Säurefalle unter SO₃-Bindung verwendet werden konnte. Die aggressiven Abgasanteile, vor allem SO₃, sorgten in den nachgeschalteten Komponenten, d.h. E-Filter 22, Rauchgaskanälen und Gebläse sowie in der REA 24 für Ablagerungen und erhebliche Korrosionsbelastung.

Erfindungsgemäß wird bereits bei der Brennstoffaufbereitung im Bereich der Kohle-Förderanlage 2 für einen so hohen Ca- bzw. CaO-Gehalt des Brennstoffs gesorgt, daß die genannten Mängel herkömmlicher Kraftwerksprozesse mit Trockenfeuerungsanlagen ausgeräumt oder zumindest stark vermindert werden. Zu diesem Zweck wird vor dem Kohlebunker 3 die aus dem Filterkuchen der Filterpresse 17 gewonnene und im Bunker 18 aufgefangene KZA-Substanz aus der Kühlturm-Zusatzwasser-Aufbereitung zugesetzt. Diese Substanz besteht zu ca. 80-90% (tr) aus Calciumkarbonat (CaCO₃) entsprechend einem CaO-Gehalt von 44-50%. Die Dosierung der KZA-Substanz erfolgt mittels einer Dosierpumpe 19 kontinuierlich; die KZA-Substanz wird an der Stelle 30 einem Kohle in den Kohlenbunker 3 transportierenden Förderband aufgegeben. Als Führungsgröße für die Zudosierung der CaO-haltigen KZA-Substanz dient bei dem beschriebenen Ausführungsbeispiel die über eine Bandwaage 31 gemessene Kohlemenge. Das Verhältnis kann über einen geeigneten Regler 32 in Abhängigkeit von dem CaO-Gehalt der dem Kohlenlager 1 entnommenen Kohle eingestellt werden.

Die kontinuierliche Bekalkung an der Stelle 30 vor dem Kohlebunker 3 hat den Vorteil, daß der CaO-Gehalt für den gesamten Inhalt des Kohlebunkers 3 gleichbleibend eingestellt werden kann und unabhängig ist von Teil- oder Vollastbetrieb des Kraftwerks und der jeweils dem Bunker 3 entnommenen Kohlemenge. Ein besonderer Vorteil des beschriebenen erfindungsgemäßen Prozesses liegt in der Tatsache, daß die Ca-haltige Substanz unmittelbar im Kraftwerksprozeß erzeugt wird, also keine zusätzlichen und ggf. kostspieligen Einsatzsubstanzen bedingt. Versuche haben gezeigt, daß bei der beschriebenen Art der Kühlung und der Verwendung Ca-ärmerer Kohle als Brennstoff im wesentlichen gerade soviel KZA-Substanz zur CaO-Anreicherung des Brennstoffs an der Stelle 30 verbraucht werden kann, wie im KZA-Prozeß gewonnen wird (Bilanzgleichgewicht).

Selbstverständlich kann alternativ und bei Einsatz anderer Kühlsysteme auch ein beliebiges anderes Ca-haltiges Mittel vor der Brenneranlage 5 dem Brennstoff zugeführt werden. Die Zuführung kann auch im Bereich der Kohlemühle 4 oder hinter dieser in das Brennstoff-Luftgemisch erfolgen. Unter den Umständen des beschriebenen Kraftwerksprozesses ist die Anbindung der KZA-Substanz-Gewinnung an die Kohle-Förderanlage 2 jedoch besonders günstig.

## Patentansprüche

1. Verfahren zum Betreiben eines Kohlekraftwerks unter Verwendung einer Trockenfeuerungsanlage, deren Rauchgasstrom durch Denox-, Luvo-, Partikelabscheide- und Entschwefelungsanlagen geleitet wird,
**dadurch gekennzeichnet,**
daß als Brennstoff ein CaO-haltiger Kohlenstaub verwendet wird und der CaO-Gehalt des Brennstoffs auf einen Bereich zwischen 0,3% und demjenigen Maximalanteil eingestellt wird, bei dem der Erweichungspunkt der Verbrennungspartikel merklich herabgesetzt wird.

2. Verfahren nach Anspruch 1, dadurch gekennzeichnet, daß dem Kohlenstaub vor Erreichen des Brenners kontinuierlich CaO beigemischt und der CaO-Gehalt auf einen Wert im Bereich von 0,4 - 0,6% eingestellt wird.

3. Verfahren nach Anspruch 1, dadurch gekennzeichnet, daß der CaO-Gehalt auf Werte > 0,6% eingestellt und der Trockenfeuerungsanlage ein den Erweichungspunkt der Verbrennungspartikel erhöhendes Mittel, z.B. Bauxit (Al₂O₃), zugeführt wird.

4. Verfahren nach einem der Ansprüche 1 bis 3, wobei die als Brennstoff dienende Kohle zu einem Bunker transportiert, vom Bunker einer Mühle aufgegeben, gemahlen und dosiert den Brennern der Trockenfeuerungsanlage zugeführt wird, dadurch gekennzeichnet, daß eine Ca-haltige Substanz der Kohle während deren Transport zum Bunker zudosiert wird.

5. Verfahren nach Anspruch 4, dadurch gekennzeichnet, daß als Ca-haltige Substanz ein bei der Kühlturm-Zusatzwasser-Aufbereitung (KZA) gewonnenes Produkt verwendet wird.

6. Verfahren nach Anspruch 5, dadurch gekennzeichnet, daß die KZA-Substanz sedimentiert, eingedickt und entwässert wird, bevor sie dem Brennstoff zudosiert wird.

7. Verfahren nach einem der Ansprüche 4 bis 6, dadurch gekennzeichnet, daß die Kohle während des Transports zum Bunker über eine Bandwaage geleitet und der Meßwert der Bandwaage als Führungsgröße zur Dosierung der Ca-haltigen Substanz verwendet wird.

8. Verfahren nach einem der Ansprüche 1 bis 6, dadurch gekennzeichnet, daß eine Ca-haltige Trockensubstanz vor oder in einer Kohlemühle dem Brennstoff zudosiert wird.

9. Verwendung des Verfahrens nach einem der Ansprüche 1 bis 8 zur Abbindung von Arsen durch Kalk zu Calciumarsenat.

10. Verwendung des Verfahrens nach einem der Ansprüche 1 bis 8 zum Reduzieren der Konversionsrate (SO₂/SO₃) im Katalysator.
